# EUROPEAN PATENT SPECIFICATION

(11) **EP 1 853 120 B1**
(45) Date of publication and mention of the grant of the patent: **01.09.2010**
(21) Application number: 06736579.1
(22) Date of filing: 28.02.2006
(51) Int. Cl.: A23G 3/54, A23G 3/44, A23G 3/00

(54) **CENTER-FILLED JELLY CONFECTIONS**
GEFÜLLTE GELEEBONBONS
CONFISERIES GÉLIFIÉES FOURRÉES

(30) Priority: 04.03.2005 US 658840 P
(43) Date of publication of application: 14.11.2007
(73) Proprietor: WM. WRIGLEY JR. COMPANY, Chicago, Illinois 60611 (US)
(72) Inventor: ROYO, Angel, Palomes, E-08192 Sant Quirze Del Valles Barcelona (ES); GARCIA, Albert, Xambo, E-08204 Savadell (ES); FITER, Ignasi, Cugat, E-08320 El Masnou (ES)
(74) Representative: Hayes, Adrian Chetwynd
(86) International application number: PCT/US2006/007285
(87) International publication number: WO 2006/096412

(56) References cited:
- WO-A-93/11754
- WO-A-2004/084649
- FR-A- 2 796 248
- GB-A- 1 060 258
- US-A- 5 626 896
- US-A1- 2003 077 362
- US-B1- 6 528 102

## Description

### BACKGROUND OF THE INVENTION

The present invention relates to center-filled confectionery products, and more particularly to a jelly confectionery with a liquid center filling that may provide a high initial flavor impact, and methods of making such products.

There are many liquid filled confectionery products known in the art. Liquid center candies, as such, are favorites of many candy lovers. They provide a variety of textures and a level of interest not realized by many other candies, and provide a unique and recognizable point of difference to consumers. They are often produced with the same flavor in the filling as in the exterior, and sometimes with a complimentary, different flavor. Among the various types of liquid center candy products are jelly candies, chocolate creams, and the like. Sometimes, the center is not liquid when the product is made, but is liquefied later.

Presently, various procedures are used to manufacture liquid-center candies; such as fondant/invertase liquefaction, center-fill co-extrusion, injection filling and center-in-shell co-depositing. Fondant/invertase liquefaction is generally accomplished by mixing the enzyme, invertase, in a fondant that is enrobed with chocolate. The enzyme later converts the fondant to a liquid by breaking down sucrose to invert sugar. The enzymatic action is dependant on the amount of available moisture, pH, and temperature. This method does not work well with jelly candy because of the jelly candy's low moisture content. Jelly candy is put into molds at 25-30% moisture and then cured for further drying. Thus, by the time the invertase has time to liquefy, the center filling, there is not enough water remaining for invertase action.

Center-fill co-extrusion is generally used to fill hard candy with jam-like material. The first step is to form a rope of hard candy. Second, a small pipe that sticks into the hard candy is used to pump jam into the candy. The rope of candy is then run through cutters, and pinched to form seams. This method is specific for hard candy, taffy or other high-cooked candy. However, center-fill co-extrusion does not work with jelly candy, because there are problems with seal failure. Center shell depositing uses a depositing nozzle that has a concentric design so that it can pump an outer stream and a center stream at the same time. Pumping is timed so that the outer shell is pumped into the mold first, and then the inside stream comes on after a sleeve of outer candy is created with the initial deposit. It is successfully used to fill peanut butter, fondant and other paste like fillings into chocolate. However, filling thin liquid into jelly candy has not been well demonstrated by this method due to excessive leaks. Leaks are more likely to develop with jelly candy than with other types of candy for several reasons. First, because of the density of sugary liquids, they will sink through hot jelly to the bottom of the mold. As a result, leaks will develop, because the bottom of the piece of candy will have a thin wall. Second, if pump timing is even slightly irregular, filling will be slightly to the side. This will create a thin outer wall, which creates potential for a leak. If the cut-off on the nozzle is not perfectly timed and a string of the inner liquid comes up through the outer jelly, a leak pathway will develop. Third, jelly candies tend to shrink and contract as they are dried. This gives them a pressurized effect. If there is any leak pathway within jelly candy, the liquid is squeezed out of the center.

Since flavors are better perceived in liquid than in colloidal jelly, a free flowing liquid center offers uniquely pleasant eating qualities and delivers a pronounced flavor advantage over solid jelly candy. Texture and eating qualities are improved by the liquid lubrication of the jelly mass during mastication. Since liquid centers are desirable, and present methods for preparing liquid-centered jelly candy are inadequate, a demand exists for a process to prepare a variety of center-filled candies.

It would be desirable if a product could be made that had a jelly (chewy) texture, but also included a liquid filling. It would be even more desirable if the product could provide a high initial flavor impact, such as a sudden menthol flavor burst, but then still be retained in the mouth with a duration of flavor as the product is masticated. It would further be desirable if the outer layer were transparent so that the liquid center were visible to the consumer before biting into the product, and that the liquid center maintained a well-defined boundary with the chewy outer layer.

US-A-6528102 discloses a two component fruit snack confection including a fruit snack material jacket and a distinct center filling.

WO 93/11754 discloses oral compositions in the form of microcapsules which reduce oral bacteria.

US-A-2003/0077362 discloses a candy product using as a flavor component a flavorant particle which comprises a hydrophilic flavor encapsulated in a water soluble shell.

WO 2004/084649 discloses a food product comprising a gelled water-based shell and a liquid center wherein the shell contains a mixture of kappa carrageenan and iota carrageenan.

US-A-5626896 discloses a liquid-centered jelly candy in which jelly candy is deposited in a starch mold, a hard candy pellet is centered on the jelly candy and a second deposit of warm jelly candy is filled over the pellet.

### BRIEF SUMMARY OF THE INVENTION

A novel, center-filled confectionery product has been invented. In one embodiment the product provides a high initial flavour impact. Further, a method of making the product has also been invented. In an embodiment the product is sugarfree.

In a first aspect, the invention is a center-filled jelly product comprising: (a) a liquid filling containing between 0.5% and 5% menthol and a level of flavor in addition to the menthol of between 0.3% and 3.5% to provide the product with a strong initial flavour impact when bitten into; and (b) jelly material completely encasing the liquid filling, the jelly material comprising between 9% and 19% gelatin and providing a chewy texture to the product.

In a second aspect, the invention is a center-filled jelly product comprising: (a) a liquid filling containing between 0.5% and 5% flavor to provide the product with a strong initial flavor impact when bitten into and 0.05% and 0.3% xanthan gum as a thickening agent; and (b) jelly material completely encasing the liquid filling, the jelly material comprising between 9% and 19% gelatin and providing a chewy texture to the product.

In a third aspect, the invention is a center-filled jelly product comprising: (a) a liquid filling containing between 0.5% and 5% flavor to provide the product with a strong initial flavor impact when bitten into and a coloring; and (b) jelly material completely encasing the liquid filling, the jelly material being transparent and comprising between 9% and 19% gelatin and providing a chewy texture to the product.

In a fourth aspect, the invention is a method of making a center-filled jelly product comprising: (a) making an outer jelly confection by: (i) dissolving a gelling agent in water to form a gelling solution; (ii) heating a syrup containing a bulk sweetener to remove moisture and thereby form a first mass; and (iii) mixing the first mass, the gelling solution and optionally one or more secondary ingredients to form a second mass; (b) making a liquid filling by mixing a thickening agent, one or more bulk sweeteners, water and flavor to form a liquid filling; and (c) depositing the second mass at a temperature of between 60°C and 85°C, and the liquid filling at a temperature of between 50°C and 85°C, into a mold such that the liquid filling is totally encased by the second mass and the second mass will fill into at least a portion of the shape of the mold.

In some embodiments of the invention, the outer jelly layer is transparent and clear, and the liquid filling is colored, such that the liquid filling is visible to the consumer before the product is placed in the mouth. A quick flavor release is achieved as the liquid filling enters the mouth when the product is bitten into. If a high level of menthol and flavor are included in the center filling, a quick burst of menthol and flavor is achieved.

These and other advantages of the invention will be best understood in view of the attached drawings.

### BREIF DESCRIPTION OF DRAWINGS

Fig. 1 is a flow chart showing a first method of the present invention.
Fig. 2 is a flow chart showing a second method of the present invention.
Fig. 3 is a depiction of a center-filled jelly product of the present invention.
Fig. 4 is a depiction of a first step in depositing the product of Fig. 3.
Fig. 5 is a depiction of a second step in depositing the product of Fig. 3.
Fig. 6 is a depiction of a third step, near the completion of the deposition of the product of Fig. 3.

### DETAILED DESCRIPTION OF THE DRAWINGS AND PREFERRED EMBODIMENTS

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

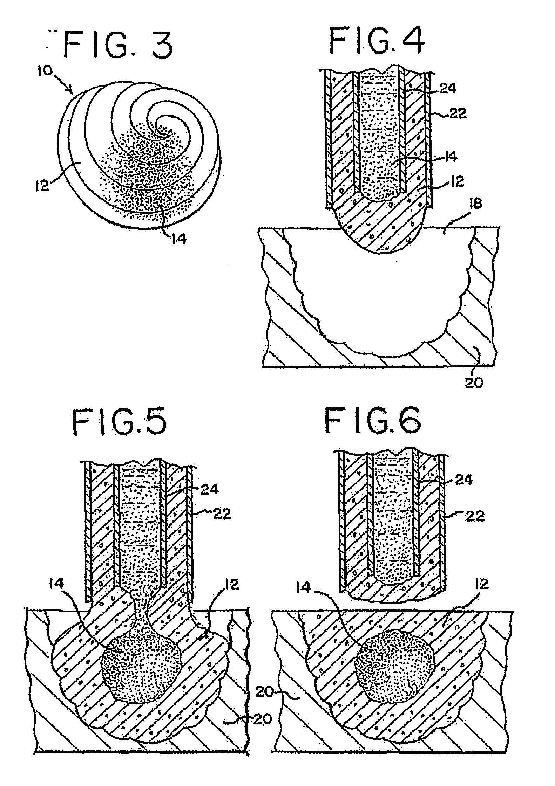

A center-filled jelly product 10 of the present invention is shown in Fig. 3. While the product of the present invention can be formed in any desired shape, the product 10 has swirled contours molded on its outer surface. It has an outer jelly material 12 and a liquid filling 14. The jelly material completely encases the liquid filling. As a general matter, the jelly material 12 comprises a gelling agent and provides a chewy texture to the product. On the other hand, the liquid filling 14 contains a high level of flavor. In the exemplary product 10 the jelly material is transparent and uncolored, and the liquid filling 14 is colored and visible through the jelly material 12. Also, in the product 10 the liquid filling and encasing jelly material have a distinct boundary between them (best seen in Fig. 6).

The jelly material 12 is made with one or more bulk sweeteners and a gelling material, and optionally other ingredients such as a food grade acid, a high-intensity sweetener and flavor. The liquid center is made from a thickening agent, one or more bulk sweeteners, water and flavor, and optionally other ingredients, such as a food grade acid and a high-intensity sweetener. When high levels of menthol are used, the liquid filling may also include a bitterness reducer. A bitterness reducer may comprise a high-intensity sweetener, particularly neohespridine.

The bulk sweeteners that may be used in the jelly material and in the liquid filling may be sugar or sugarless. The same or different bulk sweetener or sweeteners used in the jelly material may be used in the liquid filling. Preferred sugarless bulk sweeteners may be selected from the group consisting of sorbitol, maltitol, xylitol, erythritol, lactitol, hydrogenated starch hydrolysates, hydrogenated isomaltulose, polydextrose, mannitol, and mixtures thereof. Preferred sugar bulk sweeteners may be selected from the group consisting of fructose, glucose, corn syrup solids, sucrose, starch hydrolysates, maltodextrins and mixtures thereof. While not preferred, both sugar and sugarless bulk sweeteners may be used together.

The jelly material 12 may be made with between 9% and 19% gelling agent. However, if softer products are desired, the gelling agent may be as low as 4% of the jelly material. In some embodiments the gelling agent comprises between 10% and 15% gelling agent, and may comprise 11% of the jelly material. The gelling agent may be selected from the group consisting of gelatin, pectin, agar agar, and mixtures thereof. Less preferably the gelling agent may comprise starch or gum arabic. The preferred gelling agent is gelatin which has a Bloom of between 150 and 280. The amount and type of gelling agent that is used will generally make it so that the product maintains its shape at a temperature of 35°C; more preferably the product maintains its shape at a temperature of 40°C. In some embodiments the jelly material also comprises between 50% and 80% bulk sweetener, between 0.01% and 4% citric acid, between 0.01% and 3% flavor and between 0.01% and 0.1% high-intensity sweetener.

The liquid filling may include between 0.5% and about 5% flavor to provide the product with a strong initial flavor impact when bitten into. In one embodiment the liquid filling includes 0.5% and 5% menthol and a level of flavor in addition to the menthol of between 0.3% and 3.5%. The liquid filling also comprises between 0.05% and 0.3% of a thickening agent. The thickening agent may be selected from the group consisting of xanthan gum, pectin, agar agar, carageenan and mixtures thereof. In one embodiment xanthan gum is used as the thickening agent, and comprises about 0.17% the liquid filling. The liquid filling may comprise between 1% and 3% menthol, more preferably 2% menthol. The liquid filling may further contain between 0.001% and 0.5% color, more preferably between 0.1% and 0.2% color.

On a dry basis, the liquid filling may include between 70% and 90% bulk sweetener, between 0.05% and 0.3% xanthan gum, between 0.01% and 3% citric acid, between 0.5% and 5% menthol, between 0.3% and 3.5% flavor in addition to the menthol, between 0.001% and 0.5% color and between 0.01% and 0.6% high-intensity sweetener. The high-intensity sweetener may be selected from the group consisting of aspartame, acesulfame K, neohespridine, saccharin, thaumatin, and mixtures thereof. The additional flavoring agents may include fruit flavors, particularly black currant flavor.

The flavors that are used in the jelly material and in the liquid filling may include physiological cooling agents, as well as essential oils, synthetic flavors, or mixtures including but not limited to oils derived from plants and fruits such as citrus oils, fruit essences, peppermint oil, spearmint oil, clove oil, oil of wintergreen, anise and the like. Artificial flavoring components are also contemplated for use in the confectionary product. Those skilled in the art will recognize that natural and artificial flavoring agents may be combined in any sensorially acceptable blend. All such flavors and flavor blends are contemplated by the present invention.

One method of making the center-filled jelly product involves making the outer jelly material 12 and the liquid center filling 14 and then depositing them in a mold to make the product 10. A method of depositing the materials is a co-depositing technique, but other methods are also available.

To make the outer jelly confection, the gelling agent is dissolved in water to form a gelling solution. Meanwhile, a syrup containing a bulk sweetener is cooked (heated to drive off moisture) to form a first mass. The gelling solution and the first mass, and optionally one or more secondary ingredients, are mixed to form a second mass. The liquid filling is made by mixing a thickening agent, one or more bulk sweeteners, water and flavor. When both the liquid filling and second mass are ready, they are deposited into a mold.

The mold may be a flexible mold, such as silicon, it may comprise depressions made in a bed of powder material, such as starch, or it may be a coated metal mold that includes an ejector pin to help demold the product. In an embodiment, the second mass and liquid filling are deposited in blisters formed in a sheet of material, and the product is packaged while still in the blisters.

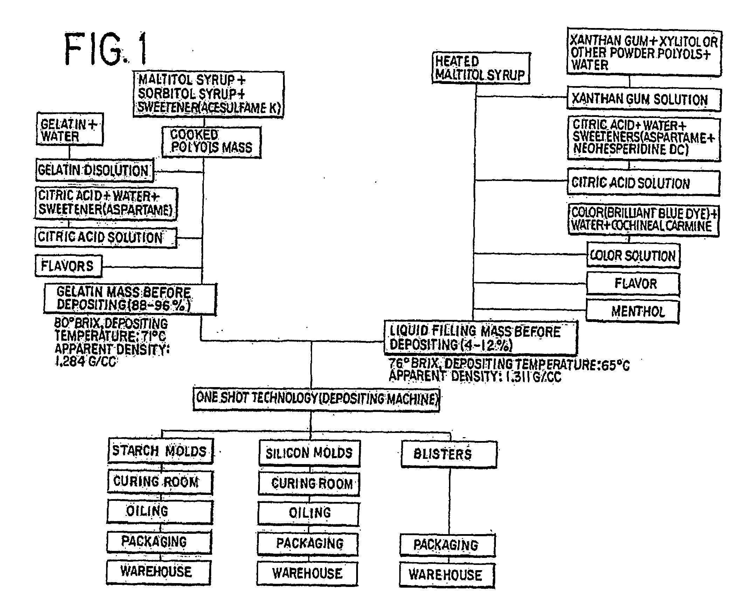

A method of making the product 10 is outlined in Fig. 1. In this embodiment, the first mass is made by heating a solution of maltitol and sorbitol syrups, along with acesulfame K. The first mass may be heated using vacuum cooking. The syrup may be made from a powdered bulk sweetener dissolved in water, or it may be supplied to the process in the form of a syrup directly from the manufacturer. Meanwhile, gelatin is dissolved in water to form a gelatin solution; and citric acid, water and aspartame are mixed to form a citric acid solution. Once the first mass reaches the desired concentration, it is mixed with the gelatin solution, the citric acid solution and flavor to form the second mass.

The liquid filling may be made by cooking (heating to remove moisture) one or more syrups comprising the one or more bulk sweeteners. Thus, the water in the liquid filling may be provided at least in part by providing the bulk sweetener used to make the liquid filling in the form of a syrup, such as a heated maltitol syrup as shown in Fig. 1. The thickening agent, such as xanthan gum, may be mixed with a bulk sweetener and water prior to being mixed into the liquid filling. When the product is sugarless, the bulk sweeteners may include xylitol and other polyols. Also, as shown in Fig. 1, citric acid, water, aspartame and neohesperidine are mixed together to form a citric acid solution. Meanwhile, the color may be mixed to form a color solution. Then the heated syrup, the xanthan gum solution, the citric acid solution, the color solution, flavor and menthol are all mixed together to form the liquid filling.

Figs. 4-6 show an example co-depositing operation into a depression 18 formed in a bed or powdered material 20. The first mass 12 is delivered in a tube 22. Inside of that tube is another tube 24, containing the liquid filling 14. The viscosity of the second mass is such that it stays in the tube 22 until forced out. Once the tube 22 is over the depression 18, the second mass is forced out of the tube to begin to fill the depression. As shown in Fig. 5, after the depression is partly filled, the liquid filling 14 is also forced out of tube 24, forming a liquid center in the partially filled depression. Additional second mass is delivered after the liquid filling has stopped flowing to fill in the top of the mold, and encase the liquid filling 14. Depositing equipment, such as model M3000 or MX3000 from NID, 18 Stokes Ave., Alexandria, Sydney, Australia, or other machinery suppliers such as W&D, Hosokawa and APV Baker, may be used to deposit the confectionery.

Successfully depositing the liquid filling and second mass (referred to in Fig. 1 as a gelatin mass) so that the liquid filling is completely encased in the jelly component requires that several conditions be observed. First, the temperature and Brix of the two components must be controlled so that they are the right consistency for depositing. More importantly, if the liquid filling is codeposited with the second mass, the densities of the two products must be very close to one another so that the liquid filling neither sinks down nor floats up in the second mass before the second mass cools and becomes solid. In this regard, it is preferable if the liquid filling and second mass have densities that are within 0.05 g/cc of each other, more preferably within 0.02 g/cc of each other. In an embodiment, the liquid filling and second mass each have a density of 1.3 g/cc.

The second mass may have a Brix of between 70° and 85°, more preferably between 75° and 78°, when it is deposited. After the product has cured, the Brix of the second mass will often be between 81° and about 85°. The liquid filling may have a Brix of between 70° and 85°, more preferably between 74° and 78°, when it is deposited. The Brix of one material is independent of the other material. However, the preferred Brix conditions have been found suitable so that "tails" are not formed as the liquid center filling is deposited, which would result in a leak path in the jelly material.

The second mass may be deposited at a temperature of between 60°C and 85°C, and the liquid filling is deposited at a temperature of between 50°C and 85°C. More preferably, the second mass is deposited at a temperature of between 75°C and 80°C, and the liquid filling is deposited at a temperature of between 70°C and 80°C. Most preferably the second mass is deposited at a temperature of about 71°C, and the liquid filling is deposited at a temperature of about 65°C. The second mass may have a water content of between 12% and 22%, more preferably between 17% and 18%, when it is deposited. The liquid filling may have a water content of between 15% and 25%, more preferably between 19% and 20%, when it is deposited.

As noted in Fig. 1, the product may be deposited into starch molds. After the deposition, the starch molds are sent to a curing room. During curing the second mass cools and dries to form a product which has a flexible, quite hard and rubbery texture that is difficult to chew. After the product is cured it is demolded and treated to oiling, packaging and warehousing steps that are common for jelly products formed in a starch mold. Alternatively, the product is deposited in a silicon mold, or a coated metal mold After the product is cured, it is demolded and also treated to oiling, packaging and warehousing steps. The product removed from the mold may be packaged in plastic bags, metal boxes or other containers suitable to maintain the product's quality during distribution. In one embodiment, the molds comprise blisters that are formed in a sheet of material. The product is deposited in these blisters, and stays in the blisters while the product is packaged and distributed. The consumer thus removes the product from the blister sheet just before the product is consumed.

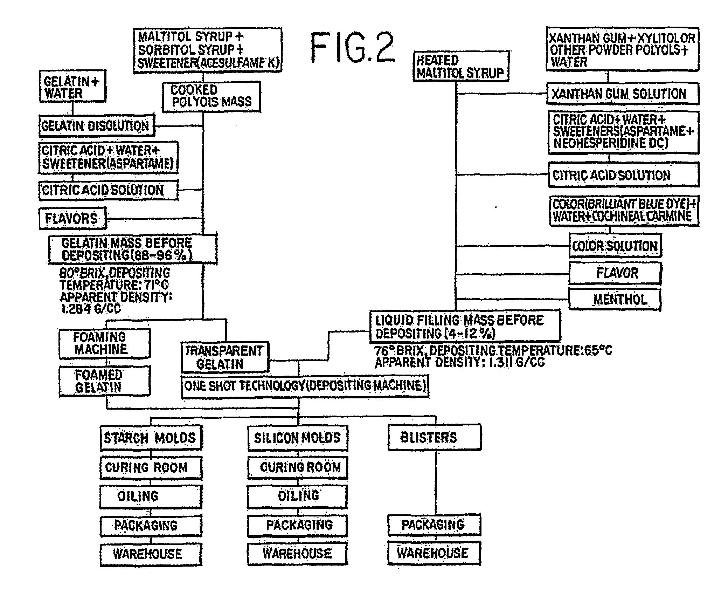

In addition to a method of co-depositing, the second mass may be deposited in a first part, followed by deposition of the liquid filling and a second deposition of the second mass. One embodiment of this is shown in Fig. 2. The processes of Fig. 1 and Fig. 2 are the same until the step of depositing. At this point, the gelatin mass is divided into two steams. One remains transparent and is deposited first into the lower part of the mold. The liquid filling can be codeposited, or deposited later. However, in this embodiment, the second mass is not used to finish filing the mold. Rather, some of the second mass is fed into a foaming machine where air is mixed in with it before it is deposited to form a foam layer. The foamed gelatin is applied to finish filing the mold. With this embodiment the density of the liquid filling can be less than that of the transparent gelatin because the foamed gelatin will have an even lower density, thus preventing the liquid filling from floating up in the deposited product.

The second mass may comprise between 80% and 96% of the product, and the liquid filling may comprise between 4% and 20% of the product. More preferably, the liquid filling comprises between 8% and 12% of the product. The product may have a piece weight of between 2 and 8 grams.

An exemplary product is a packaged center-filled product comprising a) a sheet of material having a plurality of blister cavities formed therein; and b) a filled jelly product in each cavity comprising an outer jelly material having a shape conforming to the blister cavity and completely encasing a liquid center filling. The liquid center comprises 60% to 80% maltitol; 0.05% to 0.3% xanthan gum; 0.01% to 3% citric acid; 0.01% to 0.6% high-intensity sweetener; 0.1% to 5% menthol; 0.2% to 1.5% fruit flavor; 0.001% to 0.5% color; and 19% to 26% moisture. The outer jelly material comprises 50% to 70% maltitol; 20% to 40% sorbitol; 0.01 % to 4% citric ac id; 0.01% to 0.1% high-intensity sweetener; 9% to 19% gelatin; 0.3% to 3% fruit flavor; and 15% to 23% moisture.

The invention will be better understood by way of the follow example, which is not to be taken as limiting.

**Example 1** A liquid center-filled product was made according to the process outlined in Fig. 1. Table 1 gives the composition of the ingredients going into the outer layer. Table 2 gives the ratio of the ingredients going into the outer layer, and takes into account the moisture loss while cooking the first mass and while curing the product. Table 3 gives the composition of the ingredients going into liquid center filling. Table 4 gives the ratio of the ingredients going into the center filling. The maltitol syrup used was Lycasin ® 80/55 from Roquette. The sorbitol syrup was 70/70 sorbitol also from Roquette.

**Table 1**

| | | | | | | |
|---|---|---|---|---|---|---|
| | | | | | | |

| COOKED POLYOLS MASS | | | | % | grams | |
|---|---|---|---|---|---|---|
| | MALTITOL SYRUP | | | 66.43 | 515.000 | |
| | SORBITOL 10170 | | | 33.54 | 260.000 | |
| | ACESULFAME K | | | 0.03 | 0.250 | |
| | | | | 100.00 | 775.250 | |
| GELATIN SOLUTION GELATIN SOLUTION | | | | | | |
| | GELATIN (250 BLOOM) | | | 37.00 | 111.000 | |
| | WATER | | | 63.00 | 189.000 | |
| | | | | 100.00 | 300.000 | |
| CITRIC ACID SOLUTION | | | | | | |
| | CITRIC ACID | | | 50.00 | 10.000 | |
| | WATER | | | 50.00 | 10.000 | |
| | | Total | | 100.00 | 20.000 | |

**Table 2**

| | | | % | grams |
|---|---|---|---|---|
| COOKED POLYOLS MASS | | | 92.64 | 775.245 |
| | cooking water loss | | -23.25 | -194.555 |
| | Sub-total | | 69.39 | 580.690 |
| GELATIN SOLUTION | | | 35.85 | 300.000 |
| CITRIC ACID SOLUTION | | | 2.39 | 20.000 |
| ASPARTAME | | | 0.05 | 0.450 |
| BLACK CURRANT FLAVOR | | | 1.98 | 16.600 |
| | Sub-total | | 109.66 | 917.740 |
| | curing room water loss | | -9.66 | -80.891 |
| | Total | | 100.00 | 836.849 |

**Table 3**

| | | | | % | grams | |
|---|---|---|---|---|---|---|
| XANTHAN GUM SOLUTION | | | | | | |
| | WATER | | | 95.24 | 7.623 | |
| | XYLITOL | | | 3.17 | 0.254 | |
| | XANTHAN GUM | | | 1.59 | 0.127 | |
| | | | | 100.00 | 8.005 | |
| CITRIC ACID SOLUTION | | | | | | |
| | CITRIC ACID | | | 50.00 | 0.444 | |
| | WATER | | | 50.00 | 0.444 | |
| | | | | 100.00 | 0.888 | |
| BRILLIANT BLUE SOLUTION | | | | | | |
| | WATER | | | 95.00 | 0.006913 | |
| | BRILLIANT BLUE 85% Dye | | | 5.00 | 0.000364 | |
| | | Total | | 100.00 | 0.007277 | |

**Table 4**

| LIQUID FILLING | | | | % | grams |
|---|---|---|---|---|---|
| | MALTITOL SYRUP 85% DS | | | 84.60 | 61.567 |
| | XANTHAN GUM SOLUTION | | | 11.00 | 8.005 |
| | CITRIC ACID SOLUTION | | | 1.22 | 0.888 |
| | ASPARTAME | | | 0.20 | 0.146 |
| | ACESULFAME K | | | 0.20 | 0.146 |
| | NEOHESPERIDINE DC | | | 0.02 | 0.011 |
| | BRILLIANT BLUE SOLUTION | | | 0.01 | 0.007 |
| | COCHINEAL | CARMINE I | | 0.15 | 0.109 |
| | BLACK CURRANT FLAVOR | | | 0.60 | 0.437 |
| | | | | 2.00 | 1.455 |
| | MENTHOL | Total | | 100.00 | 72.769 |

The jelly material was deposited into a starch mold in a first part, then the liquid filling was added, then a cap of the jelly material was added to finish the piece. The jelly material was deposited at 71°C and with a Brix of 80° and an apparent density of 1.284 g/cc so that it formed 92% of the product. The liquid filling was deposited at 65°C and with a Brix of 76° and an apparent density of 1.311 g/cc so that it constituted 8% of the product.

### Example 2 SUGAR JELLY

Table 5 shows the ingredients that can be used to make a jelly material for use as the outer layer using sugar bulk sweeteners.

**Table 5**

| | | | |
|---|---|---|---|
| | | | |

| | | % | grams |
|---|---|---|---|
| CORN SYRUP 42 DE | | 53.35 | 674.91 |
| SUGAR | | 30.15 | 381.41 |
| SORBITOL 70/70 | | 1.71 | 21.67 |
| AGAR-AGAR | | 0.87 | 10.97 |
| | Sub-total | 86.08 | 1088.96 |
| ADDED WATER | | 0.87 | 11.04 |
| COOKED SUGARS Sub-total | | 86.95 | 1100.00 |
| GELATIN SOLUTION IN WATER 1:2 RATIO | | 10.28 | 130.00 |
| CITRIC ACID SOLUTION IN WATER 1:1 RATIO | | 3.16 | 40.00 |
| FLAVOR | | 0.64 | 8.08 |
| | Sub-total | 101.03 | 1278.08 |
| Curing room water loss | | -1.03 | -13.10 |
| | Total | 100.00 | 1264.98 |

Table 6 shows the ingredients that can be used to make a liquid center filling using sugar bulk sweeteners.

**Table 6**

| LIQUID FILLING | | | | % | |
|---|---|---|---|---|---|
| | CORN SYRUP 42-43 DE 45° BEAUME | | | 84.80 | |
| | XANTHAN GUM SOLUTION | | | 11.00 | |
| | CITRIC ACID SOLUTION | | | 1.22 | |
| | ASPARTAME | | | 0.10 | |
| | ACESULFAME K | | | 0.10 | |
| | NEOHESPERIDINE DC | | | 0.02 | |
| | BRILLIANT BLUE SOLUTION | | | 0.01 | |
| | COCHINEAL CARMINE | | | 0.15 | |
| | BLACK CURRANT FLAVOR | | | 0.60 | |
| | MENTHOL | | | 2.00 | |
| | | Total | | 100.00 | |

### Example 3 SUGARFREE JELLY

Table 7 shows the ingredients that can be used to make a jelly material for use as the outer layer using sugarless bulk sweeteners.

**Table 7**

| | | % | grams |
|---|---|---|---|
| MALTITOL SYRUP | | 97.00 | 1227.43 |
| SORBITOL 70170 | | 1.71 | 21.66 |
| AGAR-AGAR | | 0.87 | 10.97 |
| ACESULFAME K | | 0.03 | 0.42 |
| | Sub-total | 99.61 | 1260.48 |
| COOKING WATER LOSS | | -12.68 | -160.48 |
| COOKED SUGARS Sub-total | | 86.93 | 1100.00 |
| GELATIN SOLUTION IN WATER 1:2 RATIO | | 10.27 | 130.00 |
| CITRIC ACID SOLUTION IN WATER 1:1 RATIO | | 3.16 | 40.00 |
| FLAVOR | | 0.64 | 8.08 |
| ASPARTAME | | 0.03 | 0.40 |
| | Sub-total | 101.03 | 1278.48 |
| Curing room water loss | | -1.03 | -13.03 |
| | Total | 100.00 | 1265.45 |

The liquid filling in the product is released when the product is bitten into. The high level of flavor and menthol in the liquid center gives a very strong flavor and menthol "kick" to the product. At the same time, the external material is chewy and stays in the mouth for a while. There is a duration of flavor as the product is masticated.

One of the reasons that xanthan gum is preferred is because it has been found that when gelatin is used for the gelling agent in the outer jelly material, and xanthan gum is used for the thickening agent in the liquid center filling, the center liquid filling and chewy outer layer do not mix with one another while the product is in a liquid state, nor does the liquid center dissolve the jelly material, forming a cloudy appearance. Rather, the boundary between the liquid center and the jelly material maintains a distinct form. The center filling, being colored, can then readily be seen in the transparent jelly material.

Neohesperidine is a preferred high-intensity sweetener because it has been found to reduce the bitter effect of high levels of menthol in the center filling. While it is preferred to heat the syrup used to make the liquid filling and reduce its moisture content, it may be possible to use 85% solids maltitol solutions directly from a manufacturer.

If the product is deposited into starch, it will loose more moisture during the curing step than if it is deposited into flexible silicon molds or blisters in a tray. Thus the final moisture content of the outer jelly material will be 17% to 23%, more preferably 20%, in a blister, but more like 15% to 21% if molded in a starch mold.

It should be appreciated that the methods and compositions of the present invention are capable of being incorporated in the form of a variety of embodiments, only a few of which have been illustrated and described above. The invention may be embodied in other forms without departing from its spirit or essential characteristics. For example, the liquid filling need not be disposed in the center of the product. The outer jelly material just needs to encase it with a wall thickness sufficient that the liquid does not leak out. While the preferred jelly material is clear and uncolored, it could be transparent and slightly tinted. If the product is deposited with a first deposition of the outer jelly material and then the liquid filling, with a second depositing step for the remainder of the jelly material, the jelly material deposited in the last step may be colored, giving a product with multi colors. Also, the flavor in the liquid filling may be designed to be one more appealing to youngsters, and have a strong fruit flavor and even a sour kick instead of a menthol kick.

It will be appreciated that the addition of some other ingredients, process steps, materials or components not specifically included will have an adverse impact on the present invention. The best mode of the invention may therefore exclude ingredients, process steps, materials or components other than those listed above for inclusion or use in the invention. However, the described embodiments are to be considered in all respects only as illustrative and not restrictive, and the scope of the invention is, therefore, indicated by the appended claims rather than by the foregoing description. All changes which come within the meaning and range of equivalency of the claims are to be embraced within their scope.

## Claims

1. A method of making a center-filled jelly product comprising:
a) making an outer jelly confection by:
i) dissolving a gelling agent in water to form a gelling solution;
ii) heating a syrup containing a bulk sweetener to remove moisture and thereby form a first mass; and
iii) mixing the first mass, the gelling solution and optionally one or more secondary ingredients to form a second mass;
b) making a liquid filling by mixing a thickening agent, one or more bulk sweeteners, water and flavor to form a liquid filling; and
c) depositing the second mass at a temperature of between 60°C and 85°C, and the liquid filling at a temperature of between 50°C and 85°C, into a mold such that the liquid filling is totally encased by the second mass and the second mass will fill into at least a portion of the shape of the mold.

2. The method of claim 1 wherein the liquid filling is made by heating one or more syrups comprising the one or more bulk sweeteners.

3. The method of any one of the preceding claims wherein said water in the liquid filling is provided at least in part by providing the bulk sweetener used to make the liquid filling in the form of a syrup.

4. The method of any one of the preceding claims wherein the second mass is deposited at a temperature of between 75°C and 80°C, and the liquid filling is deposited at a temperature of between 70°C and 80°C.

5. The method of any one of claims 1 to 3 wherein said second mass is deposited at a temperature of 71°C.

6. The method of any one of the preceding claims wherein said thickening agent is selected from the group consisting of xanthan gum, pectin, agar agar, carageenan and mixtures thereof.

7. The method of any one of the preceding claims wherein said flavor in the liquid filling comprises menthol and additional flavoring agents.

8. The method of any one of the preceding claims wherein said bulk sweetener in the first mass comprises a sugarless bulk sweetener selected from the group consisting of sorbitol, maltitol, xylitol, erythritol, lactitol, hydrogenated starch hydrolysates, polydextrose, hydrogenated isomaltulose, mannitol, and mixtures thereof.

9. The method of claim 8 wherein said bulk sweetener in said first mass comprises maltitol and sorbitol.

10. The method of any one of claims 1 to 7 wherein said bulk sweetener in said first mass comprises a sugar selected from the group consisting of fructose, glucose, corn syrup solids, sucrose, starch hydrolysates, maltodextrins and mixtures thereof.

11. The method of any one of the preceding claims wherein said secondary ingredients comprise one or more of a food grade acid, flavor and high-intensity sweetener.

12. The method of any one of the preceding claims wherein said bulk sweetener in the liquid filling comprises a heated maltitol syrup.

13. The method of any one of the preceding claims wherein said liquid filling has a water content of between 15% and 25% when it is deposited.

14. The method of any one of claims 1 to 12 wherein said liquid filling has a water content of between 19% and 20% when it is deposited.

15. The method of any one of the preceding claims wherein said second mass has a water content of between 12% and 22% when it is deposited.

16. The method of any one of claims 1 to 14 wherein said second mass has a water content of between 17% and 18% when it is deposited.

17. The method of any one of the preceding claims wherein said liquid filling is deposited at a temperature of about 65°C.

18. The method of any one of the preceding claims wherein said second mass has a Brix of between 70° and 85° when it is deposited.

19. The method of any one of claims 1 to 17 wherein said second mass has a Brix of between 75° and 78° when it is deposited.

20. The method of any one of the preceding claims wherein said liquid filling has a Brix of between 70° and 85° when it is deposited.

21. The method of any one of claims 1 to 19 wherein said liquid filling has a Brix of between 74° and 78° when it is deposited.

22. The method of any one of the preceding claims wherein said liquid filling further comprises between 0.001 % and 0.5% color.

23. The method of any one of claims 1 to 21 wherein said liquid filling further comprises between 0.1% and 0.2% color.

24. The method of any one of the preceding claims wherein said second mass and liquid filling are deposited in a flexible mold.

25. The method of any one of claims 1 to 23 wherein said second mass and liquid filling are deposited into depressions made in a bed of powder material.

26. The method of claim 25 wherein said powder material comprises starch.

27. The method of any one of claims 1 to 23 wherein said second mass and liquid filling are deposited into blisters and the product is packaged while still in said blisters.

28. The method of any one of claims 1 to 23 wherein said second mass and liquid filling are deposited into coated metal molds.

29. The method of any one of the preceding claims wherein the liquid filling is deposited while the second mass is being deposited.

30. The method of any one of claims 1 to 28 wherein the second mass is deposited in a first part, followed by deposition of the liquid filling and a second deposition of the second mass.

31. The method of claim 30 wherein the second mass used in the second deposition has air mixed in with it before it is deposited to form a foam layer.

32. The method of any one of the preceding claims wherein said second mass comprises between 80% and 96% of the product, and the liquid filling comprises between 4% and 20% of the product.

33. The method of any one of claims 1 to 31 wherein said second mass comprises between 88% and 92% of the product and the liquid filling comprises between 8% and 12% of the product.

34. The method of any one of the preceding claims wherein said gelling agent is selected from the group consisting of gelatin, pectin, agar agar, and mixtures thereof.

35. The method of any one of the preceding claims wherein said gelling agent comprises between 4% and 19% of the outer jelly confection.

36. The method of any one of the preceding claims wherein said second mass comprises between 50% and 80% bulk sweetener, between 9% and 19% gelatin, between 0.01% and 4% citric acid, between 0.01% and 3% flavor and between 0.01% and 0.1% high-intensity sweetener.

37. The method of any one of the preceding claims wherein said second mass cools and dries to form a product which has a flexible, quite hard and rubbery texture that is difficult to chew.

38. The method of any one of the preceding claims wherein said second mass is transparent and the liquid filling is colored.

39. The method of any one of the preceding claims wherein the thickening agent is mixed with a bulk sweetener and water prior to being mixed into the liquid filling.

40. The method of any one of the preceding claims wherein the liquid filling and second mass have densities that are within 0.05 g/cc of each other.

41. The method of any one of the preceding claims wherein the liquid filling and second mass each have a density of 1.3 g/cc.

42. The method of any one of the preceding claims wherein the syrup cooked to form the first mass is made from a powdered bulk sweetener dissolved in water.

43. The method of any one of the preceding claims wherein the first mass is heated using vacuum cooking.

44. A center-filled jelly product comprising:
a) a liquid filling, and
b) jelly material completely encasing the liquid filling, the jelly material comprising between 9% and 19% gelatin and providing a chewy texture to the product;
wherein the liquid filling (a) is:
a1) a liquid filling containing between 0.5% and 5% menthol and a level of flavor in addition to menthol of between 0.3% and 3.5% to provide the product with a strong initial flavor impact when bitten into;
a2) a liquid filling containing between 0.5% and 5% flavour to provide the product with a strong initial flavor impact when bitten into and between 0.05% and 0.3% xanthan gum as a thickening agent; or
a3) a liquid filling containing between 0.5% and 5% flavor to provide the product with a strong initial flavor impact when bitten into and a coloring.

45. The product of claim 44 comprising a bitterness reducer in the liquid filling.

46. The product of claim 45 wherein the bitterness reducer comprises a high-intensity sweetener.

47. The product of any one of claims 44 to 46 wherein said product has a piece weight of between 2 and 8 grams.

48. The product of any one of claims 44 to 47 wherein the jelly material is transparent and uncolored, and the liquid filling is colored and visible through the jelly material.

49. The product of any one of claims 44 to 48 wherein said gelling agent comprises between 10% and 15% of the jelly material.

50. The product of any one of claims 44 to 49 wherein said gelling agent comprises about 11 % of the jelly material.

51. The product of any one of claims 44 to 50 wherein said liquid filling comprises between 0.05% and 0.3% of a thickening agent.

52. The product of any one of claims 44 to 51 wherein said liquid filling comprises about 0.17% xanthan gum as said thickening agent.

53. The product of any one of claims 44 to 52 wherein the liquid filling and encasing jelly material have a distinct boundary between them.

54. The product of any one of claims 44 to 53 wherein said liquid center comprises between 1% and 3% menthol.

55. The product of any one of claims 44 to 53 wherein said liquid center comprises about 2% menthol.

56. The product of any one of claims 44 to 53 wherein said liquid filling comprises (on a dry basis) between 70% and 90% bulk sweetener, between 0.05% and 0.3% xanthan gum, between 0.01% and 3% citric acid, between 0.5% and 5% menthol, between 0.3% and 3.5% flavor in addition to the menthol, between 0.001% and 0.5% color and between 0.01% and 0.6% high-intensity sweetener.

57. The product of any one of claims 44 to 58 wherein the product maintains its shape at a temperature of 35°C.

58. The product of any one of claims 44 to 58 wherein the product maintains its shape at a temperature of 40°C.

59. The product of any one of claims 44 to 58 wherein the additional flavoring agents comprise black currant flavor

60. The product of any one of claims 44 to 59 wherein the product is sugarless.

61. The product of any one of claims 44 to 60 wherein the jelling agent comprises gelatin with a Bloom of between 150 and 280.

62. The product of any one of claims 44 to 61 wherein the product further comprises a high-intensity sweetener selected from the group consisting of aspartame, acesulfame K, neohespridine, saccharin, thaumatin, and mixtures thereof.

63. A packaged center-filled product comprising:
a) a sheet of material having a plurality of blister cavities formed therein; and
b) a filled jelly product in each cavity comprising an outer jelly material having a shape conforming to the blister cavity and completely encasing a liquid center filling; the liquid center comprising:
i) 60% to 80% maltitol;
ii) 0.05% to 0.3% xanthan gum;
iii) 0.01% to 3% citric acid;
iv) 0.01% to 0.6% high-intensity sweetener;
v) 0.1% to 5% menthol;
vi) 0.2% to 1.5% fruit flavor;
vii) 0.001% to 0.5% color; and
viii) 19% to 26% moisture;
and the outer jelly material comprising:
i) 50% to 70% maltitol;
ii) 20% to 40% sorbitol;
iii) 0.01% to 4% citric acid;
iv) 0.01% to 0.1% high-intensity sweetener;
v) 9% to 19% gelatin;
vi) 0.3% to 3% fruit flavor; and
vii) 15% to about 23% moisture.

## Patentansprüche

1. Verfahren zur Herstellung eines mittig gefüllten Geleeprodukts, wobei das Verfahren die folgenden Schritte aufweist:
a) Herstellung eines äußeren Gelee-Konfekts durch:
i) Auflösen eines Geliermittels in Wasser zur Bildung einer Gelierlösung;
ii) Erhitzen eines einen Zuckeraustauschstoff enthaltenden Dicksafts bzw. Sirups zur Beseitigung von Feuchtigkeit bzw. Wassergehalt und somit Bildung einer ersten Masse;
iii) Mischen der ersten Masse, der Gelierlösung und optional eines oder mehrerer sekundärer Zutaten zur Bildung einer zweiten Masse;
b) Herstellung einer flüssigen Füllung durch Mischen eines Verdickungsmittels, eines oder mehrerer Zuckeraustauschstoffe, Wasser und Aroma zur Bildung einer flüssigen Füllung; und
c) Ablegen der zweiten Masse bei einer Temperatur zwischen 60°C und 85°C, und der flüssigen Füllung bei einer Temperatur zwischen 50°C und 85°C in eine Form, so dass die flüssige Füllung vollständig von der zweiten Masse umschlossen bzw. umhüllt ist, und so dass die zweite Masse zumindest einen Teil der Formgestalt der Form ausfüllt.

2. Verfahren nach Anspruch 1, **dadurch gekennzeichnet, dass** die flüssige Füllung durch Erhitzen eines oder mehrerer Dicksäfte bzw. Sirupe, welche den einen oder mehrere Zuckeraustauschstoffe enthalten, erzeugt wird.

3. Verfahren nach einem der vorhergehenden Ansprüche, **dadurch gekennzeichnet, dass** das Wasser in der flüssigen Füllung zumindest teilweise **dadurch** bereitgestellt wird, dass der Zuckeraustauschstoff, welcher zur Herstellung der flüssigen Füllung verwendet wird, in Form eines Dicksafts bzw. Sirups vorgesehen ist.

4. Verfahren nach einem der vorhergehenden Ansprüche, **dadurch gekennzeichnet, dass** die zweite Masse bei einer Temperatur zwischen 75°C und 80°C abgelegt wird, und dass die flüssige Füllung bei einer Temperatur zwischen 70°C und 80°C abgelegt wird.

5. Verfahren nach einem der Ansprüche 1 bis 3, **dadurch gekennzeichnet, dass** die zweite Masse bei einer Temperatur von 71°C abgelegt wird.

6. Verfahren nach einem der vorhergehenden Ansprüche, **dadurch gekennzeichnet, dass** das Verdickungsmittel aus der Gruppe bestehend aus Xanthangummi, Pektin, Agar-Agar, Karrageen und Gemischen daraus ausgewählt wird.

7. Verfahren nach einem der vorhergehenden Ansprüche, **dadurch gekennzeichnet, dass** das Aroma in der flüssigen Füllung Menthol und zusätzliche Aromastoffe aufweist.

8. Verfahren nach einem der vorhergehenden Ansprüche, **dadurch gekennzeichnet, dass** der Zuckeraustauschstoff in der ersten Masse ein zuckerloser Zuckeraustauschstoff ist, welcher aus der Gruppe bestehend aus Sorbitol, Maltit, Xylitol, Erythritol, Laktitol, hydrierte Stärkehydrolysate, Polydextrose, hydrierte Isomaltulose, Mannitol und Gemischen daraus ausgewählt wird.

9. Verfahren nach Anspruch 8, **dadurch gekennzeichnet, dass** der Zuckeraustauschstoff in der ersten Masse Maltit und Sorbitol aufweist.

10. Verfahren nach einem der Ansprüche 1 bis 7, **dadurch gekennzeichnet, dass** der Zuckeraustauschstoff in der ersten Masse einen Zucker aufweist, welcher aus der Gruppe bestehend aus Fruktose, Glukose, Maissirup-Feststoffen, Rohrzucker, StärkeHydrolysaten, Maltodextrinen und Gemischen daraus ausgewählt wird.

11. Verfahren nach einem der vorhergehenden Ansprüche, **dadurch gekennzeichnet, dass** die sekundären Zutaten bzw. Bestandteile Lebensmittelsäure und/oder Aroma und/oder Hochintensitäts-Süßungsmittel aufweisen.

12. Verfahren nach einem der vorhergehenden Ansprüche, **dadurch gekennzeichnet, dass** der Zuckeraustauschstoff in der flüssigen Füllung erhitzten Maltitol-Sirup aufweist.

13. Verfahren nach einem der vorhergehenden Ansprüche, **dadurch gekennzeichnet, dass** die flüssige Füllung einen Wassergehalt von zwischen 15% und 25% aufweist, wenn diese abgelegt wird.

14. Verfahren nach einem der Ansprüche 1 bis 12, **dadurch gekennzeichnet, dass** die flüssige Füllung einen Wassergehalt von zwischen 19% und 20% bei ihrer Ablage aufweist.

15. Verfahren nach einem der vorhergehenden Ansprüche, **dadurch gekennzeichnet, dass** die zweite Masse einen Wassergehalt von zwischen 12% und 22% bei ihrer Ablage aufweist.

16. Verfahren nach einem der Ansprüche 1 bis 14, **dadurch gekennzeichnet, dass** die zweite Masse einen Wassergehalt von zwischen 17% und 18% bei ihrer Ablage aufweist.

17. Verfahren nach einem der vorhergehenden Ansprüche, **dadurch gekennzeichnet, dass** die flüssige Füllung bei einer Temperatur von ungefähr 65°C abgelegt wird.

18. Verfahren nach einem der vorhergehenden Ansprüche, **dadurch gekennzeichnet, dass** die zweite Masse einen Brix von zwischen 70° und 85° bei ihrer Ablage aufweist.

19. Verfahren nach einem der Ansprüche 1 bis 17, **dadurch gekennzeichnet, dass** die zweite Masse einen Brix von zwischen 75° und 78° bei ihrer Ablage aufweist.

20. Verfahren nach einem der vorhergehenden Ansprüche, **dadurch gekennzeichnet, dass** die flüssige Füllung einen Brix von zwischen 70° und 85° bei ihrer Ablage aufweist.

21. Verfahren nach einem der Ansprüche 1 bis 19, **dadurch gekennzeichnet, dass** die flüssige Füllung einen Brix von zwischen 74° und 78° bei ihrer Ablage aufweist.

22. Verfahren nach einem der vorhergehenden Ansprüche, **dadurch gekennzeichnet, dass** die flüssige Füllung des Weiteren zwischen 0,001 % und 0,5% Farbe aufweist.

23. Verfahren nach einem der Ansprüche 1 bis 21, **dadurch gekennzeichnet, dass** die flüssige Füllung des Weiteren zwischen 0,1% und 0,2% Farbe aufweist.

24. Verfahren nach einem der vorhergehenden Ansprüche, **dadurch gekennzeichnet, dass** die zweite Masse und die flüssige Füllung in einer flexiblen Form abgelegt werden.

25. Verfahren nach einem der Ansprüche 1 bis 23, **dadurch gekennzeichnet, dass** die zweite Masse und die flüssige Füllung in Vertiefungen bzw. Mulden abgelegt werden, welche in einem Bett aus Pulvermaterial ausgebildet sind.

26. Verfahren nach Anspruch 25, **dadurch gekennzeichnet, dass** das Pulvermaterial Stärke aufweist.

27. Verfahren nach einem der Ansprüche 1 bis 23, **dadurch gekennzeichnet, dass** die zweite Masse und die flüssige Füllung in Blasen abgelegt werden, und dass das Produkt verpackt wird, während es sich immer noch in diesen Blasen befindet.

28. Verfahren nach einem der Ansprüche 1 bis 23, **dadurch gekennzeichnet, dass** die zweite Masse und die flüssige Füllung in beschichteten Metallformen abgelegt werden.

29. Verfahren nach einem der vorhergehenden Ansprüche, **dadurch gekennzeichnet, dass** die flüssige Füllung abgelegt wird, während die zweite Masse abgelegt wird.

30. Verfahren nach einem der Ansprüche 1 bis 28, **dadurch gekennzeichnet, dass** die zweite Masse in einem ersten Abschnitt abgelegt wird, gefolgt von der Ablage der flüssigen Füllung und einer zweiten Ablage der zweiten Masse.

31. Verfahren nach Anspruch 30, **dadurch gekennzeichnet, dass** die bei der zweiten Ablage verwendete zweite Masse zugemischte Luft aufweist, bevor sie zur Bildung einer Schaumschicht abgelegt wird.

32. Verfahren nach einem der vorhergehenden Ansprüche, **dadurch gekennzeichnet, dass** die zweite Masse zwischen 80% und 96% des Produkts aufweist, und dass die flüssige Füllung zwischen 4% und 20% des Produkts aufweist.

33. Verfahren nach einem der Ansprüche 1 bis 31, **dadurch gekennzeichnet, dass** die zweite Masse zwischen 88% und 92% des Produkts aufweist, und dass die flüssige Füllung zwischen 8% und 12% des Produkts aufweist.

34. Verfahren nach einem der vorhergehenden Ansprüche, **dadurch gekennzeichnet, dass** das Geliermittel aus der Gruppe bestehend aus Gelatine, Pektin, Agar-Agar und Gemischen daraus ausgewählt wird.

35. Verfahren nach einem der vorhergehenden Ansprüche, **dadurch gekennzeichnet, dass** das Geliermittel zwischen 4% und 19% des äußeren Gelee-Konfekts aufweist.

36. Verfahren nach einem der vorhergehenden Ansprüche, **dadurch gekennzeichnet, dass** die zweite Masse zwischen 50% und 80% Zuckeraustauschstoff, zwischen 9% und 19% Gelatine, zwischen 0,01 % und 4% Zitronensäure, zwischen 0,01 % und 3% Aroma und zwischen 0,01 % und 0,1 % hochintensitiven Süßstoff aufweist.

37. Verfahren nach einem der vorhergehenden Ansprüche, **dadurch gekennzeichnet, dass** die zweite Masse abkühlt und trocknet, um ein Produkt zu erzeugen, welches eine flexible, ziemlich harte und gummiartige Beschaffenheit aufweist, welche schwer zerkaubar ist.

38. Verfahren nach einem der vorhergehenden Ansprüche, **dadurch gekennzeichnet, dass** die zweite Masse transparent ist und die flüssige Füllung farbig ist.

39. Verfahren nach einem der vorhergehenden Ansprüche, **dadurch gekennzeichnet, dass** das Verdickungsmittel mit einem Zuckeraustauschstoff und Wasser vermischt wird, bevor es in die flüssige Füllung gemischt wird.

40. Verfahren nach einem der vorhergehenden Ansprüche, **dadurch gekennzeichnet, dass** die flüssige Füllung und die zweite Masse Dichten aufweisen, welche innerhalb 0,05 g/cm³ zueinander liegen.

41. Verfahren nach einem der vorhergehenden Ansprüche, **dadurch gekennzeichnet, dass** die flüssige Füllung und die zweite Masse jeweils eine Dichte von 1,3 g/cm³ aufweisen.

42. Verfahren nach einem der vorhergehenden Ansprüche, **dadurch gekennzeichnet, dass** der zur Bildung der ersten Masse gekochte Dicksaft bzw. Sirup aus einem in Wasser aufgelösten pulverisierten Zuckeraustauschstoff hergestellt wird.

43. Verfahren nach einem der vorhergehenden Ansprüche, **dadurch gekennzeichnet, dass** die erste Masse erhitzt wird, indem Vakuum-Kochen eingesetzt wird.

44. Mittig gefülltes Geleeprodukt, welches Folgendes aufweist:
a) eine flüssige Füllung; und
b) Geleematerial, welches die flüssige Füllung vollständig umhüllt, wobei das Geleematerial zwischen 9% und 19% Gelatine aufweist und dem Produkt eine zähe bzw. kaugummiartige Beschaffenheit verleiht;
**dadurch gekennzeichnet, dass** die flüssige Füllung (a) der folgenden Art ist:
a1) eine flüssige Füllung, welche zwischen 0,5% und 5% Menthol und einen Aromagehalt zusätzlich zu Menthol von zwischen 0,3% und 3,5% aufweist, um dem Produkt einen starken anfänglichen Aromaeinfluss zu verleihen, wenn man in das Produkt beißt;
a2) eine flüssige Füllung, welche zwischen 0,5% und 5% Aroma aufweist, um dem Produkt einen starken anfänglichen Aromaeinfluss zu verleihen, wenn man in das Produkt beißt, sowie zwischen 0,05% und 0,3% Xanthangummi als Verdickungsmittel aufweist; oder
a3) eine flüssige Füllung, welche zwischen 0,5% und 5% Aroma aufweist, um dem Produkt einen starken anfänglichen Aromaeinfluss zu verleihen, wenn man in das Produkt beißt, sowie Farbstoff aufweist.

45. Produkt nach Anspruch 44, welches ein Bitterkeitsreduzierer in der flüssigen Füllung aufweist.

46. Produkt nach Anspruch 45, **dadurch gekennzeichnet, dass** der Bitterkeitsreduzierer einen hochintensitiven Süßstoff aufweist.

47. Produkt nach einem der Ansprüche 44 bis 46, **dadurch gekennzeichnet, dass** das Produkt ein Stückgewicht von zwischen 2 und 8 Gramm aufweist.

48. Produkt nach einem der Ansprüche 44 bis 47, **dadurch gekennzeichnet, dass** das Geleematerial transparent und ungefärbt ist, und dass die flüssige Füllung farbig und durch das Geleematerial sichtbar ist.

49. Produkt nach einem der Ansprüche 44 bis 48, **dadurch gekennzeichnet, dass** das Geliermittel zwischen 10% und 15% des Geleematerials aufweist.

50. Produkt nach einem der Ansprüche 44 bis 49, **dadurch gekennzeichnet, dass** das Geliermittel ungefähr 11 % des Geleematerials aufweist.

51. Produkt nach einem der Ansprüche 44 bis 50, **dadurch gekennzeichnet, dass** die flüssige Füllung zwischen 0,05% und 0,3% eines Verdickungsmittels aufweist.

52. Produkt nach einem der Ansprüche 44 bis 51, **dadurch gekennzeichnet, dass** die flüssige Füllung ungefähr 0,17% Xanthangummi als das Verdickungsmittel aufweist.

53. Produkt nach einem der Ansprüche 44 bis 52, **dadurch gekennzeichnet, dass** die flüssige Füllung und das umhüllende Geleematerial eine deutliche Grenzlinie zwischen sich aufweisen.

54. Produkt nach einem der Ansprüche 44 bis 53, **dadurch gekennzeichnet, dass** die flüssige Mitte zwischen 1 % und 3% Menthol aufweist.

55. Produkt nach einem der Ansprüche 44 bis 53, **dadurch gekennzeichnet, dass** die flüssige Mitte ungefähr 2% Menthol aufweist.

56. Produkt nach einem der Ansprüche 44 bis 53, **dadurch gekennzeichnet, dass** die flüssige Füllung (auf Trockenbasis) zwischen 70% und 90% Zuckeraustauschstoff aufweist, zwischen 0,05% und 0,3% Xanthangummi, zwischen 0,01 % und 3% Zitronensäure, zwischen 0,5% und 5% Menthol, zwischen 0,3% und 3,5% Aroma zusätzlich zu dem Menthol, zwischen 0,001 % und 0,5% Farbe und zwischen 0,01 % und 0,6% hochintensiven Süßstoff.

57. Produkt nach einem der Ansprüche 44 bis 56, **dadurch gekennzeichnet, dass** das Produkt seine Form bei einer Temperatur von 35°C beibehält.

58. Produkt nach einem der Ansprüche 44 bis 56, **dadurch gekennzeichnet, dass** das Produkt seine Form bei einer Temperatur von 40°C beibehält.

59. Produkt nach einem der Ansprüche 44 bis 58, **dadurch gekennzeichnet, dass** die zusätzlichen Aromastoffe das Aroma schwarzer Johannisbeere enthalten.

60. Produkt nach einem der Ansprüche 44 bis 59, **dadurch gekennzeichnet, dass** das Produkt ohne Zucker ist.

61. Produkt nach einem der Ansprüche 44 bis 60, **dadurch gekennzeichnet, dass** das Geliermittel Gelatine mit einem Bloomwert von zwischen 150 und 280 aufweist.

62. Produkt nach einem der Ansprüche 44 bis 61, **dadurch gekennzeichnet, dass** das Produkt des Weiteren einen hochintensiven Süßstoff aufweist, welcher aus der Gruppe bestehend aus Aspartam, Acesulfam K, Neohesperidin, Saccharin, Thaumatin und Gemischen daraus ausgewählt wird.

63. Abgepacktes mittig gefülltes Produkt, welches Folgendes aufweist:
a) ein Lage aus Material, welches eine Vielzahl von darin ausgebildeten Blasenhohlräumen aufweist; und
b) ein gefülltes Geleeprodukt in jedem Hohlraum, welches ein äußeres Geleematerial mit einer Form aufweist, welche dem Blasenhohlraum entspricht und eine flüssige mittige Füllung vollständig umhüllt; wobei die flüssige Mitte Folgendes aufweist:
i) 60% bis 80% Maltit;
ii) 0,05% bis 0,3% Xanthangummi;
iii) 0,01 % bis 3% Zitronensäure;
iv) 0,01 % bis 0,6% hochintensiven Süßstoff;
v) 0,1 % bis 5% Menthol;
vi) 0,2% bis 1,5% Fruchtaroma;
vii) 0,001 % bis 0,5% Farbe; und
viii) 19% bis 26% Wassergehalt;
und wobei das äußere Geleematerial Folgendes aufweist:
i) 50% bis 70% Maltit;
ii) 20% bis 40% Sorbitol;
iii) 0,01% bis 4% Zitronensäure;
iv) 0,01% bis 0,1 % hochintensiven Süßstoff;
v) 9% bis 19% Gelatine;
vi) 0,3% bis 3% Fruchtaroma; und
vii) 15% bis 23% Wassergehalt.

## Revendications

1. Procédé de fabrication d'un produit de gelée fourré comprenant les étapes consistant à:
a) fabriquer une confiserie de gelée externe en:
i) dissolvant un agent gélifiant dans l'eau pour former une solution gélifiante;
ii) chauffant un sirop contenant un édulcorant brut pour éliminer l'humidité et former ainsi une première masse; et
iii) mélangeant la première masse, la solution gélifiante et facultativement un ou plusieurs ingrédients secondaires pour former une seconde masse;
b) fabriquer un fourrage liquide en mélangeant un agent épaississant, un ou plusieurs édulcorants bruts, de l'eau et un arôme pour former un fourrage liquide; et
c) déposer la seconde masse à une température comprise entre 60°C et 85 °C, et le fourrage liquide à une température comprise entre 50°C et 85 °C, dans un moule de sorte que le fourrage liquide est totalement noyé par la seconde masse et la seconde masse remplira au moins une portion de la forme du moule.

2. Procédé selon la revendication 1, dans lequel le fourrage liquide est fabriqué en chauffant un ou plusieurs sirops contenant l'édulcorant ou les édulcorants bruts.

3. Procédé selon l'une quelconque des revendications précédentes, dans lequel ladite eau dans le fourrage liquide est fournie au moins en partie en fournissant l'édulcorant brut utilisé pour fabriquer le fourrage liquide sous la forme d'un sirop.

4. Procédé selon l'une quelconque des revendications précédentes, dans lequel la seconde masse est déposée à une température comprise entre 75°C et 80 °C, et le fourrage liquide est déposé à une température comprise entre 70°C et 80 °C.

5. Procédé selon l'une quelconque des revendications 1 à 3, dans lequel ladite seconde masse est déposée à une température de 71 °C.

6. Procédé selon l'une quelconque des revendications précédentes, dans lequel ledit agent épaississant est choisi dans le groupe consistant en la gomme de xanthane, la pectine, l'agar-agar, la carraghénine, et leurs mélanges.

7. Procédé selon l'une quelconque des revendications précédentes, dans lequel ledit arôme dans le fourrage liquide comprend du menthol et des agents aromatisants additionnels.

8. Procédé selon l'une quelconque des revendications précédentes, dans lequel ledit édulcorant brut dans la première masse comprend un édulcorant brut sans sucre choisi dans le groupe consistant en le sorbitol, le maltitol, le xylitol, l'érythritol, le lactitol, les hydrolysats d'amidon hydrogénés, le polydextrose, l'isomaltulose hydrogéné, le mannitol, et leurs mélanges.

9. Procédé selon la revendication 8, dans lequel ledit édulcorant brut dans ladite première masse comprend du maltitol et du sorbitol.

10. Procédé selon l'une quelconque des revendications 1 à 7, dans lequel ledit édulcorant brut dans ladite première masse comprend un sucre choisi dans le groupe consistant en le fructose, le glucose, la matière sèche de sirop de maïs, le saccharose, les hydrolysats d'amidon, les maltodextrines et leurs mélanges.

11. Procédé selon l'une quelconque des revendications précédentes, dans lequel lesdits ingrédients secondaires comprennent un ou plusieurs éléments parmi un acide de qualité alimentaire, un arôme et un édulcorant intense.

12. Procédé selon l'une quelconque des revendications précédentes, dans lequel ledit édulcorant brut dans le fourrage liquide comprend un sirop de maltitol chauffé.

13. Procédé selon l'une quelconque des revendications précédentes, dans lequel ledit fourrage liquide a une teneur en eau comprise entre 15 et 25 % lorsqu'il est déposé.

14. Procédé selon l'une quelconque des revendications 1 à 12, dans lequel ledit fourrage liquide a une teneur en eau comprise entre 19 % et 20 % lorsqu'il est déposé.

15. Procédé selon l'une quelconque des revendications précédentes, dans lequel ladite seconde masse a une teneur en eau comprise entre 12 % et 22 % lorsqu'elle est déposée.

16. Procédé selon l'une quelconque des revendications 1 à 14, dans lequel ladite seconde masse a une teneur en eau comprise entre 17 % et 18 % lorsqu'elle est déposée.

17. Procédé selon l'une quelconque des revendications précédentes, dans lequel ledit fourrage liquide est déposé à une température d'environ 65 °C.

18. Procédé selon l'une quelconque des revendications précédentes, dans lequel ladite seconde masse a une valeur de Brix comprise entre 70° et 85° lorsqu'elle est déposée.

19. Procédé selon l'une quelconque des revendications 1 à 17, dans lequel ladite seconde masse a une valeur de Brix comprise entre 75° et 78° lorsqu'elle est déposée.

20. Procédé selon l'une quelconque des revendications précédentes, dans lequel ledit fourrage liquide a une valeur de Brix comprise entre 70° et 85° lorsqu'il est déposé.

21. Procédé selon l'une quelconque des revendications 1 à 19, dans lequel ledit fourrage liquide a une valeur de Brix comprise entre 74° et 78° lorsqu'il est déposé.

22. Procédé selon l'une quelconque des revendications précédentes, dans lequel ledit fourrage liquide comprend en outre entre 0,001 % et 0,5 % de colorant.

23. Procédé selon l'une quelconque des revendications 1 à 21, dans lequel ledit fourrage liquide comprend en outre entre 0,1 % et 0,2 % de colorant.

24. Procédé selon l'une quelconque des revendications précédentes, dans lequel ladite seconde masse et ledit fourrage liquide sont déposés dans un moule flexible.

25. Procédé selon l'une quelconque des revendications 1 à 23, dans lequel ladite seconde masse et ledit fourrage liquide sont déposés dans des dépressions pratiquées dans un lit de matière poudreuse.

26. Procédé selon la revendication 25, dans lequel ladite matière poudreuse comprend de l'amidon.

27. Procédé selon l'une quelconque des revendications 1 à 23, dans lequel ladite seconde masse et le fourrage liquide sont déposés dans des emballages-coques et le produit est emballé pendant qu'il est encore dans lesdits emballages-coques.

28. Procédé selon l'une quelconque des revendications 1 à 23, dans lequel ladite seconde masse et ledit fourrage liquide sont déposés dans des moules en métal revêtu.

29. Procédé selon l'une quelconque des revendications précédentes, dans lequel le fourrage liquide est déposé pendant que la seconde masse est en cours de dépôt.

30. Procédé selon l'une quelconque des revendications 1 à 28, dans lequel la seconde masse est déposée dans une première partie, avant un dépôt du fourrage liquide et d'un second dépôt de la seconde masse.

31. Procédé selon la revendication 30, dans lequel la seconde masse utilisée dans le second dépôt est mélangée à de l'air avant d'être déposée pour former une couche de mousse.

32. Procédé selon l'une quelconque des revendications précédentes, dans lequel ladite seconde masse constitue entre 80 % et 96 % du produit, et le fourrage liquide constitue entre 4 % et 20 % du produit.

33. Procédé selon l'une quelconque des revendications 1 à 31, dans lequel ladite seconde masse constitue entre 88 % et 92 % du produit, et le fourrage liquide constitue entre 8 % et 12 % du produit.

34. Procédé selon l'une quelconque des revendications précédentes, dans lequel ledit agent gélifiant est choisi dans le groupe consistant en la gélatine, la pectine, l'agar-agar et leurs mélanges.

35. Procédé selon l'une quelconque des revendications précédentes, dans lequel ledit agent gélifiant constitue entre 4 % et 19 % de la confiserie de gelée externe.

36. Procédé selon l'une quelconque des revendications précédentes, dans lequel ladite seconde masse comprend entre 50 % et 80 % d'édulcorant brut, entre 9 % et 19 % de gélatine, entre 0,01 % et 4 % d'acide citrique, entre 0,01 % et 3 % d'arôme et entre 0,01 % et 0,1 % d'édulcorant intense.

37. Procédé selon l'une quelconque des revendications précédentes, dans lequel ladite seconde masse refroidit et sèche pour former un produit qui a une texture flexible, assez dure et caoutchouteuse qui est difficile à mâcher.

38. Procédé selon l'une quelconque des revendications précédentes, dans lequel ladite seconde masse est transparente et le fourrage liquide est coloré.

39. Procédé selon l'une quelconque des revendications précédentes, dans lequel l'agent épaississant est mélangé avec un édulcorant brut et de l'eau avant d'être mélangé dans le fourrage liquide.

40. Procédé selon l'une quelconque des revendications précédentes, dans lequel le fourrage liquide et la seconde masse ont des masses volumiques qui sont différentes de moins de 0,05 g/cm³ l'une de l'autre.

41. Procédé selon l'une quelconque des revendications précédentes, dans lequel le fourrage liquide et la seconde masse ont chacun une masse volumique de 1,3 g/cm³.

42. Procédé selon l'une quelconque des revendications précédentes, dans lequel le sirop cuit pour former la première masse est fabriqué à partir d'un édulcorant brut en poudre dissous dans de l'eau.

43. Procédé selon l'une quelconque des revendications précédentes, dans lequel la première masse est chauffée par cuisson sous vide.

44. Produit de gelée fourré comprenant:
a) un fourrage liquide et
b) une matière de gelée noyant complètement le fourrage liquide, la matière de gelée comprenant entre 9 % et 19 % de gélatine et donnant une texture moelleuse au produit;
où le fourrage liquide (a) est:
a1) un fourrage liquide contenant entre 0,5 % et 5 % de menthol et un taux d'arôme en plus du menthol compris entre 0,3 % et 3,5 % pour conférer au produit un fort impact d'arôme initial lorsqu'il est mordu;
a2) un fourrage liquide contenant entre 0,5 % et 5 % d'arôme pour conférer au produit un fort impact d'arôme initial lorsqu'il est mordu et entre 0,05 % et 0,3 % de gomme de xanthane comme agent épaississant; ou
a3) un fourrage liquide contenant entre 0,5 % et 5 % d'arôme pour conférer au produit un fort impact d'arôme initial lorsqu'il est mordu et un colorant.

45. Produit selon la revendication 44, comprenant un réducteur d'amertume dans le fourrage liquide.

46. Procédé selon la revendication 45, dans lequel le réducteur d'amertume comprend un édulcorant intense.

47. Produit selon l'une quelconque des revendications 44 à 46, dans lequel le produit a un poids unitaire compris entre 2 et 8 grammes.

48. Produit selon l'une quelconque des revendications 44 à 47, dans lequel la matière de gelée est transparente et non colorée, et le fourrage liquide est coloré et visible à travers la matière de gelée.

49. Produit selon l'une quelconque des revendications 44 à 48, dans lequel ledit agent gélifiant constitue entre 10 % et 15 % de la matière de gelée.

50. Produit selon l'une quelconque des revendications 44 à 49, dans lequel ledit agent gélifiant constitue environ 11 % de la matière de gelée.

51. Produit selon l'une quelconque des revendications 44 à 50, dans lequel ledit fourrage liquide comprend entre 0,05 % et 0,3 % d'un agent épaississant.

52. Produit selon l'une quelconque des revendications 44 à 51, dans lequel le fourrage liquide comprend environ 0,17 % de gomme de xanthane en tant que ledit agent épaississant.

53. Produit selon l'une quelconque des revendications 44 à 52, dans lequel le fourrage liquide et la matière de gelée de noyage ont une frontière distincte entre eux.

54. Produit selon l'une quelconque des revendications 44 à 53, dans lequel ledit fourrage liquide comprend entre 1 % et 3 % de menthol.

55. Produit selon l'une quelconque des revendications 44 à 53, dans lequel ledit fourrage liquide comprend environ 2 % de menthol.

56. Produit selon l'une quelconque des revendications 44 à 53, dans lequel ledit fourrage liquide comprend (sur une base sèche) entre 70 % et 90 % d'édulcorant brut, entre 0,05 % et 0,3 % de gomme de xanthane, entre 0,01 % et 3 % d'acide citrique, entre 0,5 % et 5 % de menthol, entre 0,3 % et 3,5 % d'arôme en plus du menthol, entre 0,001 % et 0,5 % de colorant et entre 0,01 % et 0,6 % d'édulcorant intense.

57. Produit selon l'une quelconque des revendications 44 à 56, dans lequel le produit maintient sa forme à une température de 35 °C.

58. Produit selon l'une quelconque des revendications 44 à 56, dans lequel le produit maintient sa forme à une température de 40 °C.

59. Produit selon l'une quelconque des revendications 44 à 58, dans lequel les agents aromatisants additionnels comprennent un arôme de cassis.

60. Produit selon l'une quelconque des revendications 44 à 59, dans lequel le produit est sans sucre.

61. Produit selon l'une quelconque des revendications 44 à 60, dans lequel l'agent gélifiant comprend de la gélatine avec une valeur de Bloom comprise entre 150 et 280.

62. Produit selon l'une quelconque des revendications 44 à 61, dans lequel le produit comprend en outre un édulcorant intense choisi dans le groupe consistant en l'aspartame, l'acésulfame K, la néohespridine, la saccharine, la thaumatine, et leurs mélanges.

63. Produit fourré emballé comprenant:
a) une feuille de matière dans laquelle est formée une pluralité de cavités d'emballage-coque; et
b) un produit de gelée fourré dans chaque cavité comprenant une matière de gelée externe ayant une forme se conformant à la cavité d'emballage-coque et noyant complètement un fourrage liquide; le fourrage liquide comprenant:
i) 60 % à 80 % de maltitol;
ii) 0,05 % à 0,3 % de gomme de xanthane;
iii) 0,01 % à 3 % d'acide citrique;
iv) 0,01 % à 0,6 % d'édulcorant intense;
v) 0,1 % à 5 % de menthol;
vi) 0,2 % à 1,5 % d'arôme de fruit,
vii) 0,001 % à 0,5 % de colorant; et
viii) 19 % à 26 % d'humidité;
et la matière de gelée externe comprenant:
i) 50 % à 70 % de maltitol;
ii) 20 % à 40 % de sorbitol;
iii) 0,01 % à 4 % d'acide citrique;
iv) 0,01 % à 0,1 % d'édulcorant intense;
v) 9 % à 19 % de gélatine;
vi) 0,3 % et 3 % d'arôme de fruit; et
vii) 15 % à 23 % d'humidité.
